# EUROPEAN PATENT APPLICATION

(11) **EP 1 597 990 A1**
(43) Date of publication of application: **23.11.2005**
(21) Application number: 04712200.7
(22) Date of filing: 18.02.2004
(51) Int. Cl.: A47J 37/00

(54) **AUTOMATIC BREAD MACHINE AND PROCESS FOR PRODUCING BREAD USING THE SAME**

(30) Priority: 19.02.2003 JP 2003041599
(71) Applicant: Tottori Sanyo Electric Co., Ltd., Tottori 680-8634 (JP); SANYO ELECTRIC CO., LTD., Moriguchi-shi, Osaka 570-8677 (JP); Shitogi Japan Co., Ltd., Osaka-shi, Osaka 545-0037 (JP)
(72) Inventor: FUKUMORI, Koichi c/o Shitogi Japan Co., Ltd., Abeno-ku, Osaka-shi Osaka 545-0037 (JP); SHIRAI, Yoshinari, Tottori Sanyo Elec. Co., Ltd., Tottori-shi, Tottori 680-8634 (JP); FUKUNAKA, Mitsuyo, 9-1, Ishitera Morinoshita, Soraku-gun, Kyoto 619-1221 (JP); SHIONO, Shunji, Tottori Sanyo Elec. Co., Ltd., Tottori-shi, Tottori 680-8634 (JP)
(74) Representative: Uchida, Kenji
(86) International application number: PCT/JP2004/001850
(87) International publication number: WO 2004/073470

(57) **Abstract**

An automatic bread maker capable of improving the quality of bread made by the automatic bread maker and a bread making method using such automatic bread maker are provided. When wheat flour is used as the main bread ingredient, the automatic bread maker successively performs, as shown in Fig. 11(A), a kneading process, a primary fermentation process, a degassing process, a dough resting process, a dough rounding process, a shaping and fermenting process, a baking process, and a keep-warm process (not shown). When rice flour is used in place of wheat flour as the main bread ingredient, the automatic bread maker successively performs, as shown in Fig. 11(B), a kneading process, a dough resting process, a dough rounding process, a shaping and fermenting process, a baking process, and a keep-warm process (not shown). In either case, a stirring blade is operated intermittently in the last part of the kneading process to beat the bread dough against the inner wall of a pan.

## Description

### TECHNICAL FIELD

The present invention relates to an automatic bread maker, and more particularly, to an automatic bread maker for automatically performing processes from kneading to baking of bread ingredients and a bread making method using the same.

### BACKGROUND ART

An automatic bread maker for home use is a convenient device that only requires a user to prepare bread ingredients so that the bread maker automatically performs processes from kneading to baking of the bread ingredients.

For this type of an automatic bread maker, various techniques have been proposed, such as the proposal for a technique providing a special sequence of processes for preparing pasta dough (see Patent Document 1).

In recent years, there has been a demand for developing new uses of rice flour other than conventional uses, such as dumplings. Therefore, a technique for using rice flour as a substitute for wheat flour has been proposed (e.g., see Patent Documents 2 and 3).
(Patent Document 1)
   Japanese Patent Laid-Open Publication No. 10-94485
(Patent Document 2)
   Japanese Patent Publication No. 07-100002
(Patent Document 3)
   Japanese Patent No. 3076552

### DISCLOSURE OF THE INVENTION

There is always a demand for improving the quality of the bread made by such an automatic bread maker.

Further, as described above, rice flour may be used as a bread ingredient. In such a case, there is also a demand for improving the quality of the bread thus made.

The present invention has been made in view of such circumstances. It is an object of the present invention to improve the quality of the bread made by an automatic bread maker and to provide a bread making method using such an automatic bread maker. An automatic bread maker according to one aspect of the present invention automatically performs processes from kneading to baking of bread ingredients. The automatic bread maker includes a case for covering the exterior of the automatic bread maker, a pan accommodated in the case for holding bread ingredients, a stirring unit for stirring the contents held in the pan, and a stirring control unit for having the stirring unit perform a first stirring operation for continuously stirring the bread ingredients held in the pan and a second stirring operation for intermittently stirring the bread ingredients after the first stirring operation.

In this aspect of the present invention, when bread ingredients are held in the pan, the bread ingredients are continuously kneaded and then beat against the wall surface of the pan by having the stirring unit intermittently perform a stirring operation.

In the automatic bread maker, formation of gluten in bread dough is promoted in the process of kneading the bread ingredients to strengthen the bread dough. The strong bread dough improves the quality of the resulting bread.

Another aspect of the present invention is an automatic bread maker for automatically performing processes from kneading to baking of bread ingredients. The automatic bread maker includes a case for covering the exterior of the automatic bread maker, a pan accommodated in the case for holding bread ingredients, a stirring unit for stirring the contents held in the pan, an input unit for inputting that an ingredient containing rice flour is included in the bread ingredients held in the pan, and a stirring control unit for having the stirring unit continuously stir the bread ingredients in the pan from when the stirring is started when there is an input to the input unit that an ingredient containing rice flour is included in the bread ingredients held in the pan.

In this aspect of the present invention, when bread ingredients are held in the pan, the bread ingredients are continuously stirred from when the stirring operation of the stirring unit is started.

Thus, when rice flour, which not only absorbs water more rapidly than wheat flour but also loses the absorbed water more rapidly, is used as the main bread ingredient, the bread ingredients are mixed more quickly to make bread dough. This makes it possible to bake the bread dough before the rice flour loses water and improves the quality of bread made by the automatic bread maker.

A further aspect of the present invention is an automatic bread maker for automatically performing processes from kneading to baking of bread ingredients. The automatic bread maker includes a case for covering the exterior of the automatic bread maker, a pan accommodated in the case for holding bread ingredients, a stirring unit for stirring the contents held in the pan, a stirring control unit for controlling operation of the stirring unit, a temperature control unit for controlling temperature in the pan, and a central control unit for controlling the stirring control unit and the temperature control unit to execute a predetermined control that successively performs a process of kneading the bread ingredients in the pan to make bread dough, a process of resting the bread dough, a process of rounding the bread dough, a process of shaping and fermenting the bread dough, and a process of baking the shaped and fermented bread dough.

In this aspect of the present invention, the execution of the predetermined controls omits the primary fermentation process and the degassing process that would be performed on the bread ingredients in the pan during a normal bread making process using wheat flour as the main bread ingredient.

Thus, when rice flour, which not only absorbs water more rapidly than wheat flour but also loses the absorbed water more rapidly, is used as the main bread ingredient, bread dough is made more quickly from the bread ingredients and baked. This makes it possible to bake the bread dough before the rice flour loses water and improves the quality of bread made by the automatic bread maker.

Further, the automatic bread maker according to the present invention further has an input unit for inputting that an ingredient containing rice flour is included in the bread ingredients held in the pan. The central control unit executes the predetermined control when there is an input to the input that an ingredient containing rice flour is included in the bread ingredients held in the pan.

Thus, the predetermined control is effectively executed.

A bread making method according to the present invention uses the automatic bread maker according to any one of the above aspects, with fine rice flour having a particle size of 60 meshes or more is included in the bread ingredients.

The bread making method of the present invention easily mixes the rice flour in the bread ingredients with other bread ingredients when making bread.

Thus, when rice flour, which not only absorbs water more rapidly than wheat flour but also loses the absorbed water more rapidly, is used as a main bread ingredient, bread dough is made more quickly from the bread ingredients and baked. This makes it possible to bake the bread dough before the rice flour loses water and improves the quality of bread made by the automatic bread maker.

### BRIEF DESCRIPTION OF THE DRAWINGS

Fig. 1 is a perspective view of an automatic bread maker according to an embodiment of the present invention;
Fig. 2 is a vertical front cross-sectional view illustrating the automatic bread maker of Fig. 1 in a state in which a bread pan is retained therein;
Fig. 3 is a vertical front cross-sectional view illustrating the automatic bread maker of Fig. 1 in a state in which a rice cake pan is retained therein;
Fig. 4 is a control block diagram of the automatic bread maker of Fig. 1;
Fig. 5 is an enlarged cross-sectional view showing the periphery of a console display panel of the automatic bread maker of Fig. 1;
Fig. 6 is a plan view showing the console display panel of the automatic bread maker of Fig. 1;
Fig. 7 is an explanatory diagram showing a state before the pan is locked to a water vessel of a boiler arranged in the automatic bread maker of Fig. 1;
Fig. 8 is an explanatory diagram showing a state after the pan is locked to the water vessel of the boiler arranged in the automatic bread maker of Fig. 1;
Fig. 9 is a vertical cross-sectional view taken along line A-A in Fig. 7;
Fig. 10 is a flowchart illustrating the operation of the automatic bread maker of Fig. 1; and
Fig. 11 is a diagram illustrating the contents of processing executed during the automatic bread making operation of the automatic bread maker of Fig. 1.

### BEST MODE FOR CARRYING OUT THE INVENTION

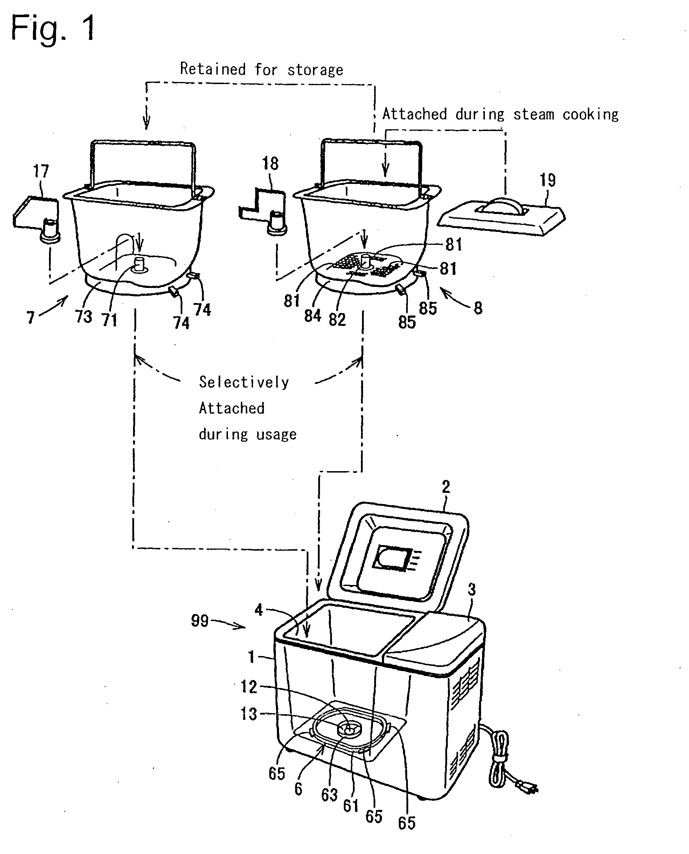

An automatic bread maker according to a preferred embodiment of the present invention will be described with reference to the drawings. Fig. 1 is a perspective view showing the external appearance of the automatic bread maker.

The automatic bread maker 99 includes a case 1, a lid 2, a console display panel 3, a baking vessel 4, a baking heater 5, a boiler 6, which is an example of a steam generation unit, two types of pans 7 and 8, which are referred to as hoppers, a motor 9, a power transmission unit 10, and a control unit 11. The two types of pans 7 and 8 are removably mounted on the boiler 6 in the baking vessel 4. The pan 7 is used for making bread, while the pan 8 is used for making rice cakes or for steam cooking.

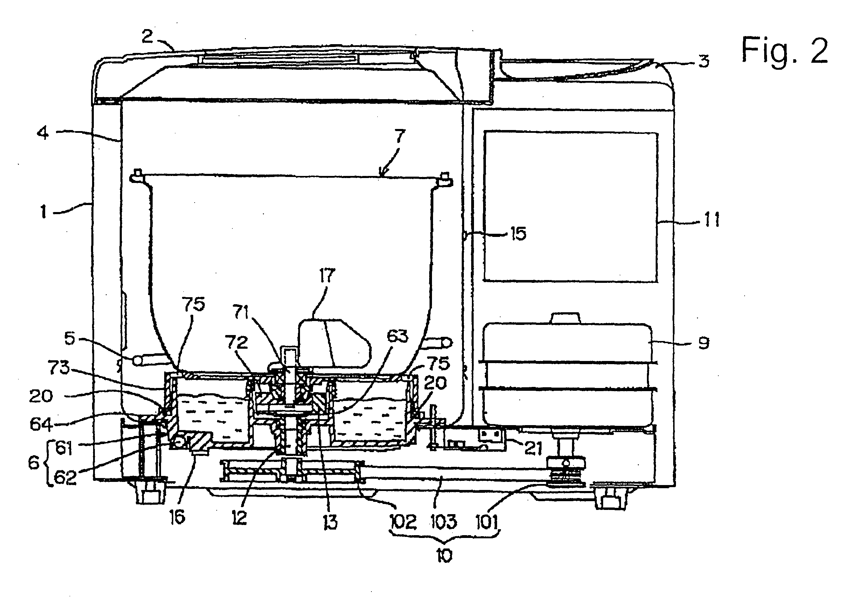

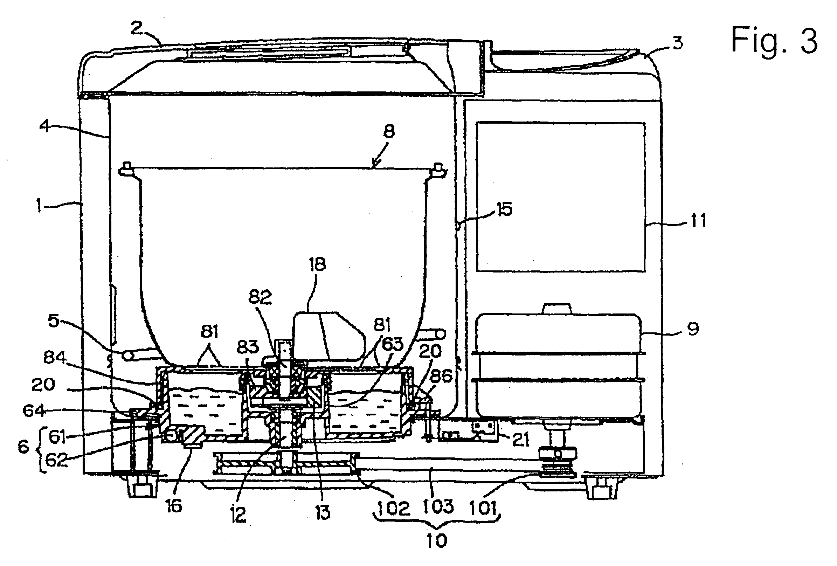

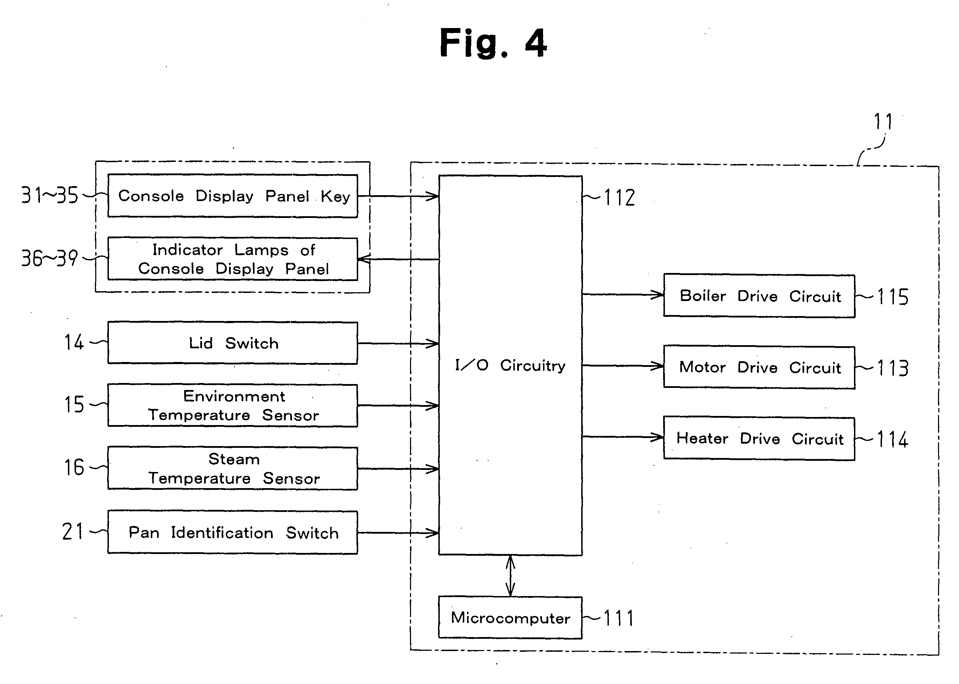

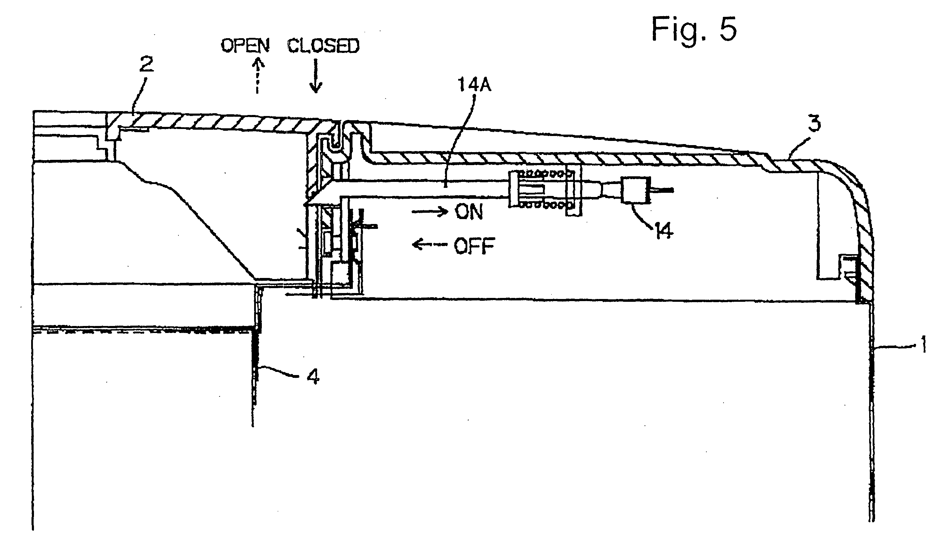

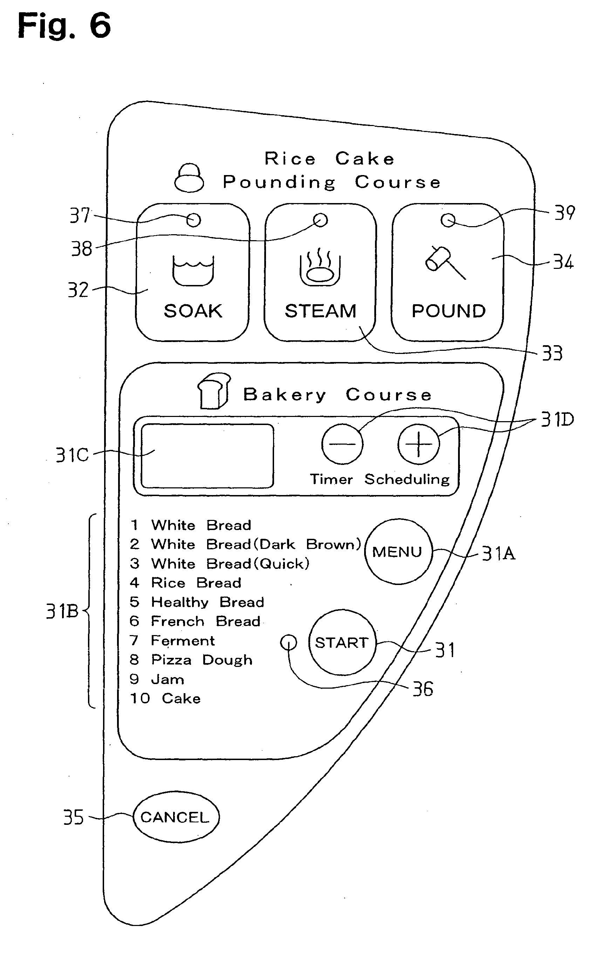

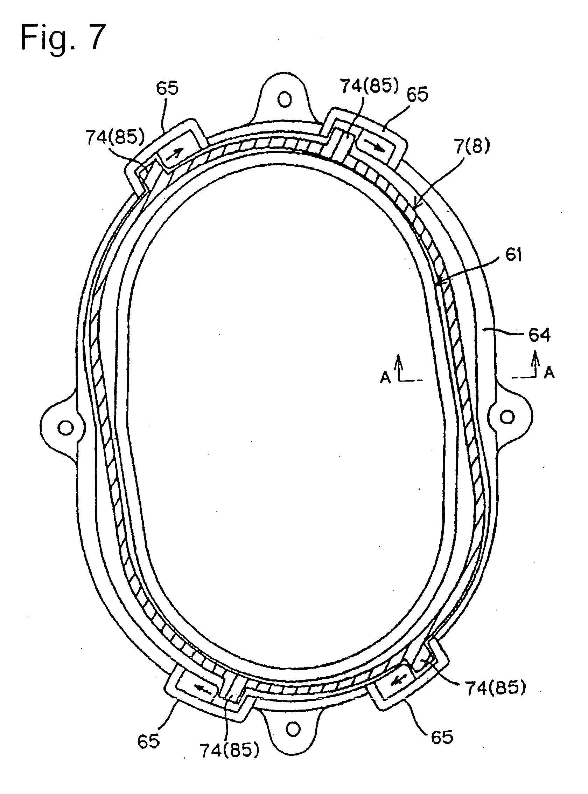

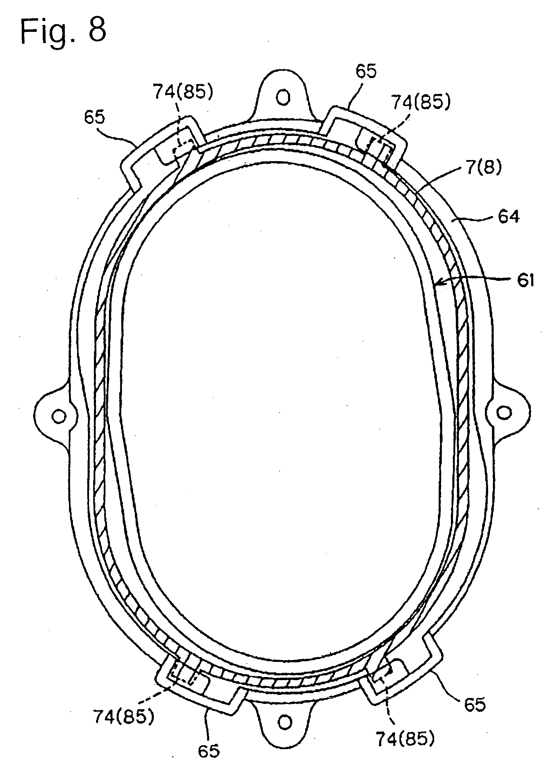

The automatic bread maker 99 will now be described in more detail with reference to Figs. 2 to 8. Fig. 2 is a vertical front cross-sectional view showing the automatic bread maker 99 with the bread pan 7 attached thereto. Fig. 3 is a vertical front cross-sectional view showing the automatic bread maker 99 having the rice cake pan 8 attached thereto. Fig. 4 is a control block diagram of the automatic bread maker 99. Fig. 5 is an enlarged cross-sectional view showing the periphery of the console display panel 3. Fig. 6 is a plan view of the console display panel 3. Fig. 7 is an explanatory diagram showing a state before the pan 7 or 8 is locked to the water vessel of the boiler 6. Fig. 8 is an explanatory diagram showing a state after the pan 7 or 8 is locked to the water vessel of the boiler 6.

The case 1 is formed to have a generally box-like shape. The top face of the case 1 is opened for an area corresponding to about 2/3 of the total area in the longitudinal direction. The lid 2 is attached to the upper opening so as to open upwardly. A lid switch 14 is provided in the upper opening of the case 1 to detect the open/close state of the lid 2. As shown in Fig. 5, the lid switch 14 is turned on by a movable pin 14A that is pressed when the lid 2 is closed and turned off as the movable pin 14A returns to its position when the lid 2 opens.

The console display panel 3, which is arranged in the remaining 1/3 of the area of the top face of the case 1, includes various keys and indicator lamps. The keys provided in the console display panel 3 include a START key 31 for starting the automatic bread making operation, a SOAK key 32 for soaking glutinous rice in water, a STEAM key 33 for steam cooking glutinous rice, a POUND key 34 for pounding steamed glutinous rice, and a CANCEL key 35. The indicator lamps provided in the console display panel 3 include a BREAD MAKING indicator lamp 36 turned on and off in accordance with the on/off operation of the START key 31, a SOAK indicator lamp 37 turned on and off in accordance with the on/off operation of the SOAK key 32, a STEAM indicator lamp 38 turned on and off in accordance with the on/off operation of the STEAM key 33, and a POUND indicator lamp 39 turned on and off in accordance with the on/off operation of the POUND key 34. The console display panel 3 further includes a MENU key 31A for selecting the type of bread that is to be made, a menu display unit 31B for displaying the types of bread and the like, a display portion 31C for displaying the menu number selected by the MENU key and a scheduled time set by a timer, and a SET button 31D for setting the timer setting. The types of bread shown on the menu display unit 31B include "white bread" of which the main ingredient is wheat flour, and "rice bread" of which the main ingredient is rice flour instead of wheat flour.

The baking vessel 4, which produces an environment in which bread dough is baked, is arranged in a region corresponding to the upper opening in the case 1. An environment temperature sensor 15 is provided on the wall of the baking vessel 4 to detect the environmental temperature in the baking vessel 4.

The baking heater 5 adjusts the environmental temperature in the interior of the baking vessel 4, and is arranged on the lower part of the inner wall near the bottom of the baking vessel 4.

The boiler 6 includes a water vessel 61 which is arranged in the bottom of the baking vessel 4. The water vessel 61 is formed to have a generally oval shape when viewed from above and has an open top. A boiler heater 62 is attached to the periphery of the bottom of the water vessel 61 to vaporize the water in the water vessel 61. A cylindrical wall 63 is provided in a central region of the water vessel 61. The cylindrical wall 63 includes a horizontal wall formed in its vertically middle part. A spindle shaft 12 rotatably extends in the vertical direction through the horizontal wall. A drive gear 13 is fixed to the upper projecting end of the spindle shaft 12. A steam temperature sensor 16 is provided on the outer bottom surface of the water vessel 61 of the boiler 6 to detect the steam temperature.

The motor 9, which rotates the spindle shaft 12 in the boiler 6 by means of the power transmission unit 10, is arranged in the case 1 in a region below the console display panel 3.

The power transmission unit 10, which is laid out along the entire inner bottom surface of the case 1, transmits the torque of the motor 9 to the spindle shaft 12. The power transmission unit 10 is formed by a pulley 101 fixed to an output shaft of the motor 9, a pulley 102 attached to the lower end of the spindle shaft 12, and an endless belt 103 wound around the pulleys 101 and 102.

The control unit 11, which controls operations related with making bread and operations related with making rice cakes, is arranged in the case 1 in a region between the console display panel 3 and the motor 9. As shown in Fig. 4, the control unit 11 includes a microcomputer 111 configured by a CPU (Central Processing Unit), a ROM (Read Only Memory), a RAM (Random Access Memory) and the like; an I/O circuitry 112; a motor drive circuit 113; a heater drive circuit 114; and a boiler drive circuit 115. The microcomputer 111 corresponds to a central control unit.

The structures of the two pans 7 and 8 will now be described in detail. Among the pans 7 and 8, the rice cake pan 8 has a bottom portion through which a plurality of steam inlet holes 81 vertically extend, whereas the bread pan 7 has a bottom portion without such holes. This is a main difference between these two pans 7 and 8. As shown in Fig. 1, the rice cake pan 8 is provided with a detachable lid 19, serving as an accessory, to close the upper opening of the rice cake pan 8. The lid 19 is used during steam cooking.

The pans 7 and 8 are formed to have a rectangular box-like shape in correspondence with the shape of two loaves of bread. The outside dimensions of the bread pan 7 are slightly smaller than those of the rice cake pan 8 so that the bread pan 7 can be held in the rice cake pan 8 for storage.

Rotating shafts 71 and 82 vertically extend through the central parts of the bottoms of the pans 7 and 8, respectively. Stirring blades 17 and 18 are detachably attached to the upper projecting ends of the rotating shafts 71 and 82, respectively, for kneading bread ingredients or rice cake ingredients. Further, driven gears 72 and 83 are attached to the lower projecting ends of the rotating shaft 71 and 82, respectively, so as to engage with the drive gear 13 of the spindle shaft 12.

Bases 73 and 84, which are respectively arranged on the outer bottom surfaces pans 7 and 8, are fixed to the water vessel 61 of the boiler 6. The bases 73 and 84 are shaped to function as a lid that seals the water vessel 61 of the boiler 6 when placed over the water vessel 61.

In order to fix the pans 7 and 8 to the boiler 6 in the baking vessel 4, as shown in Figs. 7 and 8, the pans 7 and 8 respectively have two pawls 74 and 85 formed on each of their two longitudinal ends, with a total of four latch pawls 74 and 85. Further, latch portions 65 are defined in the upper surface of the two longitudinal ends of a base frame 64, which is formed on the water vessel 61 of the boiler 6, so that the latch pawls 74 and 85 are hooked to the latch portions 65. When fixing the pans 7 and 8 to the boiler 6, the bases 73 and 84 of the pans 7 and 8 is placed on the water vessel 61 of the boiler 6. In this state, the latch pawls 74 and 85 are engaged with the latch portions 65. The pans 7 and 8 are then turned slightly in a predetermined direction (clockwise in Fig. 8) to lock the latch pawls 74 and 85 to the latch portions 65. The outer shapes of the bases 73 and 84 are larger than that of the water vessel 61 to enable such locking operation. In order to seal the water vessel 61 of the boiler 6 with the bases 73 and 84 of the pans 7 and 8, the lower end of the peripheral wall of each of the bases 73 and 84 is pressed against a packing 20 arranged on the outer periphery of the base frame 64 of the water vessel 61.

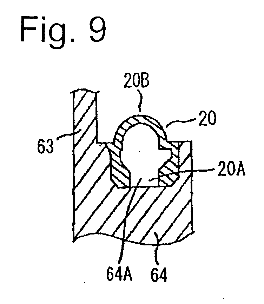

Fig. 9 is a vertical cross-sectional diagram taken along line A-A in Fig. 7. Fig. 9 shows the cross-section of the packing 20.

The packing 20, which is made of soft rubber, is hollow and has a generally reversed U-shaped cross-section. The packing 20 is attached by fitting the packing 20 from its lower open end 20A into a groove 64A, which is formed in the periphery of the base frame 64. When the bases 73 and 84 are attached to the water vessel 61, the lower end of the peripheral wall of each of the bases 73 and 84 is pressed against a top portion 20B of the packing 20. In this state, the packing 20, which has a hollow structure, is easily deformed in conformity with the shape of the lower end of the peripheral wall of each the bases 73 and 84 so as to provide tight contact. This effectively prevents the leakage of steam from the water vessel 61. Thus, the steam produced in the water vessel is totally supplied into the pan 8 so that steam cooking of glutinous rice or the like is efficiently performed.

As shown in Fig. 2, the bottom of the bread pan 7 is not provided with steam inlet holes 81 like the rice cake pan 8. However, just in case the bread pan 7 is erroneously used when making rice cakes and the internal pressure is thereby increased by the steam produced by the boiler 6, the bread pan 7 is provided with steam release holes 75 in part of the base 73.

As shown in Fig. 3, the rice cake pan 8 is provided with an identification protrusion 86 located on the peripheral wall of the base 84, whereas the bread pan 7 is provided with no such identification protrusion. In association with the identification protrusion 86, a pan identification switch 21 is arranged at a predetermined position in the bottom of the baking vessel 4. The pan identification switch 21 is turned on by the identification protrusion 86 of the rice cake pan 8.

The stirring blades 17 are 18 shaped taking into consideration the capability for kneading ingredients. More specifically, the stirring blade 17 is a so-called kneader blade used for making bread, and has a shape suitable for kneading bread ingredients and bread dough. The stirring blade 18 is a so-called pounding blade and is suitably shaped for pounding rice cakes. In order to prevent erroneous attachment of the stirring blades 17 and 18, which have different shapes, in the present embodiment, the stirring blades 17 and 18 are formed such that shaft mounting holes and the upper ends of the rotating shafts 71 and 82 of the pans 7 and 8 have different cross-sectional shapes.

Referring to Fig. 4, in the automatic bread maker 99, the control unit 11 receives various information from the console display panel 3, the lid switch 14, the environment temperature sensor 15, the steam temperature sensor 16, and the pan identification switch 21. The control unit 11 includes the boiler drive circuit 115 for controlling the operation of the boiler 6; the motor drive circuit 113 for controlling the operation of the motor 9; the heater drive circuit 114 for controlling the operation of the baking heater 5; the microcomputer 111 for controlling the operation of the motor drive circuit 113, the heater drive circuit 114, and the boiler drive circuit 115 based on the received information; and an I/O (input/output) circuitry 112 for controlling the input and output of information to and from the control unit 11. The microcomputer 111 controls the operation of the motor drive circuit 113, the heater drive circuit 114 and the boiler drive circuit 115 in accordance with the information input to the control unit 11, and also controls the display of the various indicator lamps such as the BREAD MAKING indicator lamp 36 on the console display panel 3.

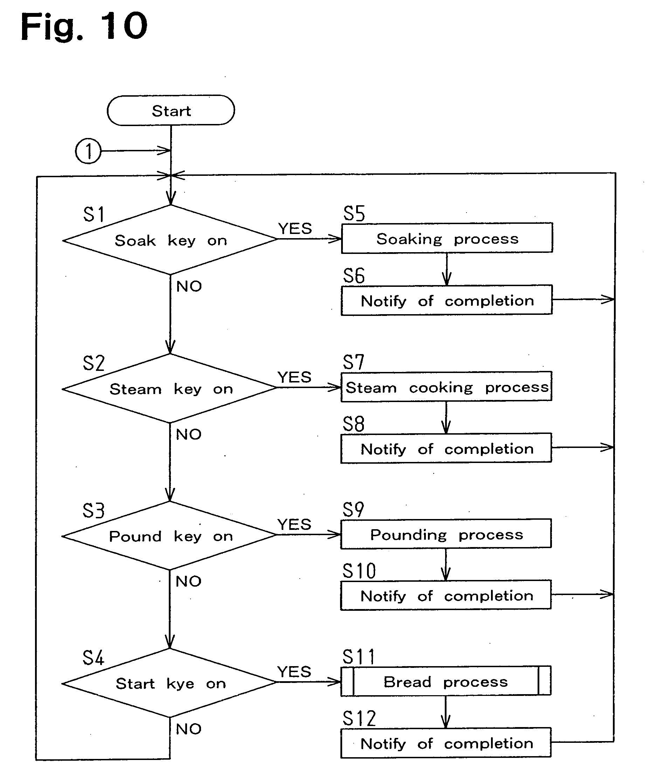

The operation of the automatic bread maker 99 based on the control of the microcomputer 111 will now be described with reference to the flowchart of Fig. 10 illustrating the contents of control of the microcomputer 111.

When powered, the automatic bread maker 99 waits until any of the START key 31, the SOAK key 32, the STEAM key 33, and the POUND key 34 on the console display panel 3 is operated in steps S1 to S4 (hereafter, the term "step" will be omitted).

In other words, the user presses the START key 31 when making bread. When making a rice cake, the user presses the SOAK key 32, the STEAM key 33, and the POUND key 34 sequentially after completion of each process. The bread pan 7 is retained in the baking vessel 4 when making bread, and the rice cake pan 8 is retained in the baking vessel 4 when making rice cakes.

If the SOAK key 32 is operated, in S5, the automatic bread maker 99 performs a soaking process to soak glutinous rice in water for a time period required for the glutinous rice to absorb the necessary amount of water. In this case, prior to the soaking process, the user is required to wash glutinous rice, put the glutinous rice into the bread pan 7, and add the necessary amount of water. The soaking process is performed, prior to a steam cooking process executed in S7, which will be described later, so that the glutinous rice absorbs water.

Upon completion of the soaking process, a process of notifying the user of the completion is performed in S6. Then, further processing is suspended until the user operates a key.

When the STEAM key 33 is operated, the boiler 6 is driven in S7 to perform a steam cooking process for steam cooking the glutinous rice which has been soaked with water in the soaking process. To prepare for this steam cooking process, the user is required to put the glutinous rice soaked with water into the rice cake pan 8 and add the necessary amount of water into the water vessel 61 of the boiler 6.

Upon completion of the steam cooking process, a process for notifying the user of the completion is performed in S8. Then, further processing is suspended until the user operates a key.

When the POUND key 34 is operated, in S9, the motor 9 and power transmission unit 10 rotate the stirring blade 18 of the pan 8 so that a pounding process is performed to knead and pound the steamed glutinous rice in the pan 8.

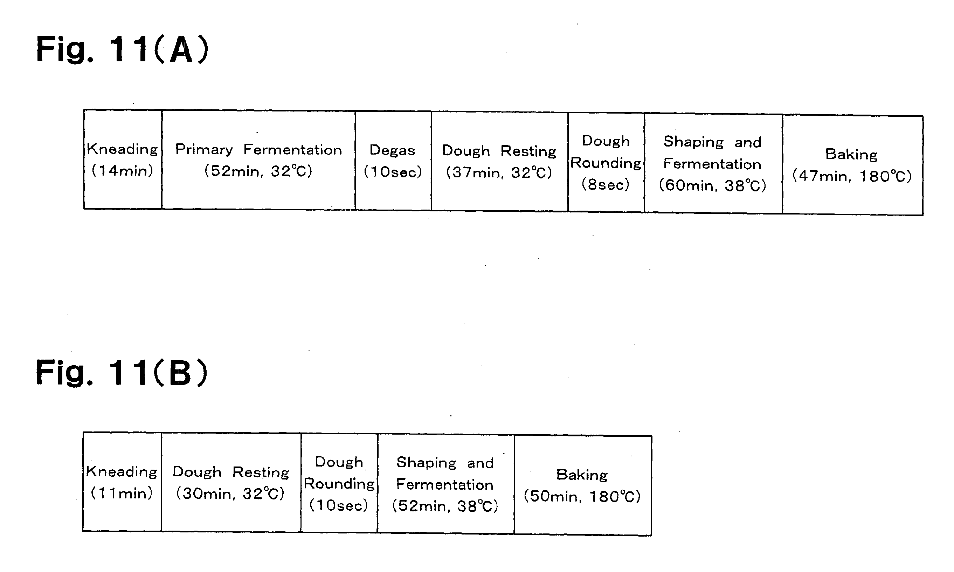

If the START key 31 is operated, the automatic bread making operation is executed in S11. In this case, before execution of the operation, the user is required to place ingredients (wheat flour, water, yeast, and the like) in the bread pan 7, select the desired menu, and set the scheduled finish time with the timer. The automatic bread maker 99 of the present embodiment performs different processes when wheat flour is used as the main ingredient for making bread (e.g., when "white bread" is selected from the types of bread shown in the menu display unit 31B) and when rice flour is used in place of wheat flour (e.g., when "rice bread" is selected from the types of bread shown in the menu display unit 31B). In the former case, the automatic bread making operation is performed, as shown in Fig. 11(A), in the sequence of a kneading process, a primary fermentation process, a degassing process, a dough resting process, a dough rounding process, a shaping and fermenting process, a baking process, and a keep-warm process (not shown) in this order.

In the kneading process, the motor 9 is driven for four minutes while being turned on and off at predetermined time intervals, and then continuously driven for eight minutes to rotate the stirring blade 17 and knead the bread ingredients. Further, five cycles of an operation in which the stirring blade 17 is stopped for three seconds and then rotated for 20 seconds are performed. Thus, the kneading process is an operation that takes a total of about 14 minutes. The motor 9 is turned on and off for the first four minutes of the kneading process to decrease the number of rotations of the stirring blade 17 per unit time to prevent scattering of the powder contained in the bread ingredients. Also, the stirring blade 17 is operated intermittently in the last part of the kneading process by stopping the blade 17 for three seconds and then rotating it for 20 seconds to beat the resulting bread dough against the inner wall of the pan 7.

When the stirring blade 17 is continuously rotated, the bread dough repeats a regular motion. If the bread dough continues such regular motion, the bread dough will be spread out between the pan 7 and the stirring blade 17 but will not be beat against the inner wall. When the stirring blade 17 is rotated intermittently, particularly when rotation of the stirring blade 17 is restarted after being stopped for a while, the bread dough, which has been still during the period the rotation of the stirring blade 17 has been stopped, is hit by the stirring blade 17 and receives a strong impact.

The bread dough is beat against the inner wall of the pan 7 by the strong impact. Further, formation of gluten in the bread dough is enhanced when the bread dough is beat against the inner wall of the pan 7 so as to strengthen the bread dough. The strong bread dough improves the quality of the bread made in this manner.

In the primary fermentation process, the environmental temperature in the baking vessel 4 is held at 32°C by the baking heater 5 and the dough is left standing for 52 minutes.

In the degassing process, the motor 9 is continuously driven for 10 seconds to rotate the stirring blade 17 and degas the bread dough.

In the dough resting process, the environmental temperature in the baking vessel 4 is held at 32°C by the baking heater 5 and the dough is left standing for 37 minutes.

In the dough rounding process, the motor 9 is continuously driven for eight seconds to rotate the stirring blade 17 and round the bread dough.

In the shaping and fermenting process, the environmental temperature in the baking vessel 4 is held at 38°C by the baking heater 5 and the dough is left standing for an appropriate time (in the range of 30 to 70 minutes, for example, 60 minutes).

In the baking process, the environmental temperature in the baking vessel 4 is held at 180°C by the baking heater 5 and the dough is left standing for 47 minutes.

In the keep-warm process, the environmental temperature in the baking vessel 4 is gradually decreased from the environmental temperature of the baking process to 80°C. During this process, the baking heater 5 is controlled to be turned on and off for up to 60 minutes.

When rice flour is used in place of wheat flour, automatic bread making operation is performed, as shown in Fig. 11(B), in the sequence of a kneading process, a dough resting process, a dough rounding process, a shaping and fermenting process, a baking process, and a keep-warm process (not shown) in this order.

In the kneading process, the motor 9 is driven for nine minutes to rotate the stirring blade 17 and knead the bread ingredients. Then, five cycles of an operation in which the stirring blade 17 is stopped for three seconds and then rotated for 20 seconds are performed. Thus, the kneading process illustrated in Fig. 11 (B) is an operation that takes a total of about 11 minutes. Unlike the kneading process illustrated in Fig. 11 (A), the stirring blade 17 is not turned on and off in the beginning of the process. This is because rice flour absorbs water more rapidly than wheat flour and loses absorbed water more rapidly than wheat flour. Therefore, when rice flour is used in bread ingredients in place of wheat flour, the bread ingredients are less likely to be scattered. The stirring blade 17 is thus not turned on and off at the beginning of the kneading process so that the bread dough is made from the bread ingredients more quickly.

In order to enhance the water absorption of rice flour in bread ingredients, the rice flour used in the bread ingredients preferably has a particle size of 60 meshes or more, and more preferably, 80 meshes or more.

The term "knead" as used in this specification refers to a process for rotating the stirring blade 17 to maximize the viscosity of the bread ingredients for baking. Further, in this specification, the "bread ingredients" are called "bread dough" once they have lost fluidity upon completion of the kneading. However, if the bread ingredients are only mixed and the fluidity remains high, they remain as "bread ingredients".

In the dough resting process, the environmental temperature in the baking vessel 4 is held at 32°C by the baking heater 5 and the bread dough is left standing for 30 minutes.

In the dough rounding process, the motor 9 is continuously driven for 10 seconds to rotate the stirring blade 17 and round the bread dough.

In the shaping and fermenting process, the environmental temperature in the baking vessel 4 is held at 38°C by the baking heater 5 and the dough is left standing for an appropriate time (in the range of 30 to 70 minutes, for example, 52 minutes).

In the baking process, the environmental temperature in the baking vessel 4 is held at 180°C by the baking heater 5 and the dough is left standing for 50 minutes. In the keep-warm process, the environmental temperature in the baking vessel 4 is gradually decreased from the environmental temperature of the baking process to 80°C. During this period, the baking heater 5 is controlled to be turned on and off for up to 60 minutes.

The automatic bread maker 99 of this embodiment as described above is convenient since it allows the user to make bread, to make rice cakes, and to steam foods. Further, when making bread, the automatic bread maker 99 performs different processes (sequences) when using wheat flour and when using rice flour as the main bread ingredient.

In particular, in comparison with the processing contents when wheat flour is used as the main bread ingredient (see Fig. 11(A)), the primary fermentation process and the degassing process are omitted from the processing contents when rice flour is used as the main bread ingredient (see Fig. 11(B)). One reason for such a difference in the processing contents is in that rice flour absorbs water more rapidly than wheat flour and also loses absorbed water more rapidly than wheat flour. In other words, one reason for the difference in the processing contents when rice flour is used in place of wheat flour as the bread ingredient is in that bread dough is made from the bread ingredients more quickly.

The bread ingredients for use in the automatic bread maker 99 may contain no wheat flour, may contain both wheat flour and rice flour, or may contain rice flour, sugar, salt, fat, oil, dry yeast, and skimmed milk. Further, the bread ingredients may contain rice flour containing gluten or may not contain such rice flour. When containing rice flour, the bread ingredients may contain plural types of rice flour.

It should be understood that the embodiment described above is illustrative and not restrictive. The scope of the invention is defined by the appended claims rather than the above description and includes all modifications that fall within the scope of the claims or their equivalences.

According to the present invention, the formation of gluten in the bread dough is promoted to strengthen the bread dough. The strong bread dough improves the quality of resulting bread.

The automatic bread maker of the present invention continuously kneads bread ingredients placed within the pan from when the stirring unit starts the stirring operation. Therefore, when rice flour, which absorbs water more rapidly than wheat flour but also loses the absorbed water more rapidly, is used as a main bread ingredient, the bread ingredients are mixed more quickly to make and bake the bread dough. Since it is possible to bake the bread dough before the rice flour loses water, the quality of bread made by the automatic bread maker is improved.

The automatic bread maker of the present invention omits the primary fermentation and degassing processes which are normally performed for bread ingredients placed in the pan during a bread making process using wheat flour as a bread ingredient. Therefore, when rice flour, which absorbs water more rapidly than wheat flour but also loses absorbed water more rapidly, is used as a bread ingredient, it is possible to mix the bread ingredients more quickly to make bread dough and bake the bread dough. Since it is possible to bake the bread dough before the rice flour loses water, the quality of bread made by the automatic bread maker is improved.

In the bread making method using the automatic bread maker of the present invention, the particle size of rice flour in the bread ingredients is specified when making bread so that the rice flour easily mixes with other bread ingredients. Therefore, when rice flour, which absorbs water more rapidly than wheat flour but also loses absorbed water more rapidly, is used as a bread ingredient, it is possible to mix the bread ingredients more quickly to make bread dough and bake the bread dough. Since it is possible to bake the bread dough before the rice flour loses water, the quality of bread made by the automatic bread maker is improved.

### INDUSTRIAL APPLICABILITY

The present invention is applicable to an automatic bread maker for making bread with ingredients including rice flour.

## Claims

1. An automatic bread maker for automatically performing processes from kneading to baking of bread ingredients, the automatic bread maker comprising:
a case for covering the exterior of the automatic bread maker;
a pan accommodated in the case for holding bread ingredients;
a stirring unit for stirring the contents held in the pan; and
a stirring control unit for having the stirring unit perform a first stirring operation for continuously stirring the bread ingredients held in the pan and a second stirring operation for intermittently stirring the bread ingredients after the first stirring operation.

2. An automatic bread maker for automatically performing processes from kneading to baking of bread ingredients, the automatic bread maker comprising:
a case for covering the exterior of the automatic bread maker;
a pan accommodated in the case for holding bread ingredients;
a stirring unit for stirring the contents held in the pan;
an input unit for inputting that an ingredient containing rice flour is included in the bread ingredients held in the pan; and
a stirring control unit for having the stirring unit continuously stir the bread ingredients in the pan from when the stirring is started when there is an input to the input unit that an ingredient containing rice flour is included in the bread ingredients held in the pan.

3. An automatic bread maker for automatically performing processes from kneading to baking of bread ingredients, the automatic bread maker comprising:
a case for covering the exterior of the automatic bread maker;
a pan accommodated in the case for holding bread ingredients;
a stirring unit for stirring the contents held in the pan;
a stirring control unit for controlling operation of the stirring unit;
a temperature control unit for controlling temperature in the pan; and
a central control unit for controlling the stirring control unit and the temperature control unit to execute a predetermined control that successively performs a process of kneading the bread ingredients in the pan to make bread dough, a process of resting the bread dough, a process of rounding the bread dough, a process of shaping and fermenting the bread dough, and a process of baking the shaped and fermented bread dough.

4. The automatic bread maker according to claim 3, further comprising an input unit for inputting that an ingredient containing rice flour is included in the bread ingredients held in the pan, the central control unit executing the predetermined control when there is an input to the input unit that an ingredient containing rice flour is included in the bread ingredients held in the pan.

5. A bread making method using the automatic bread maker according to any of claims 2 to 4, wherein fine rice flour having a particle size of 60 meshes or more is included in the bread ingredients.
